# EUROPEAN PATENT SPECIFICATION

(11) **EP 0 956 159 B1**
(45) Date of publication and mention of the grant of the patent: **19.03.2003**
(21) Application number: 96943143.6
(22) Date of filing: 20.12.1996
(51) Int. Cl.: B01J 39/10, G21F 9/12

(54) **GRANULAR TITANATE ION EXCHANGERS AND METHOD FOR PREPARATION THEREOF**
TITANATIONENTAUSCHER IN GRANULATENFORM UND METHODE ZU IHRER HERSTELLUNG
ECHANGEURS D'IONS TITANATE GRANULAIRES ET LEUR PROCEDE DE PREPARATION

(30) Priority: 22.12.1995 FI 956222
(43) Date of publication of application: 17.11.1999
(73) Proprietor: Fortum Nuclear Services Oy, 00048 Fortum (FI)
(72) Inventor: LEHTO, Jukka, FIN-00910 Helsinki (FI); LEINONEN, Heikki, FIN-04440 Järvenpää (FI); HARJULA, Risto, FIN-02320 Espoo (FI)
(74) Representative: Sundman, Christoffer
(86) International application number: FI9600694
(87) International publication number: WO97023290

(56) References cited:
- WO-A-83/03819
- DERWENT'S ABSTRACT, No. 88-019111, Week 8803; & JP,A,62 282 646 (HITACHI LTD), 8 December 1987.
- DERWENT'S ABSTRACT, No. 78-88856A, Week 7849; & JP,A,53 125 985 (HITACHI LTD), 2 November 1978.

## Description

### Background of the Invention

### Field of the Invention

The present invention relates to granular titanate ion exchangers and to a method of producing such ion exchangers.

### Description of Related Art

There are many objectives for the separation of radionuclides from nuclear waste solutions, e.g., minimization of volumes of final wastes, declassification or exemption of large amounts of wastes, and minimization of radioactive releases into the environment. The radionuclides of cesium, ^{134,137}Cs, are present in most waste solutions and these are often responsible for most of the total radioactivity contained in waste. However, in waste solutions of nuclear fuel reprocessing and nuclear weapons manufacturing plants radioactive strontium, ⁹⁰Sr, is just as much of a problem as cesium; both are fission products, which have rather long half-lifes (30 years) and high fission yields.

A major waste stream arising from above-mentioned plants comprises the alkaline concentrated salt solutions. In these solutions radioactive strontium, ⁹⁰Sr, and cesium make up most of the total activity of solutions, whereas the majority of the other radionuclides are precipitated onto the container bottom.

For the removal of soluble radionuclides both precipitation and ion exchange methods have been used. Ion exchange is much more straightforward and provides better decontamination and volume reduction.

Organic ion exchange resins are being extensively used in the nuclear power industry for the removal of radionuclides from solutions, especially in the purification of primary coolant and low-salt waste solutions at nuclear power plants. Unlike many inorganic ion exchangers, organic resins are not, however, very ion selective and they are not resistant to high temperatures and radiation doses. As a result, for highly concentrated salt solutions and highly active waste solutions, selective inorganic ion exchangers are the only choice, as described in *Lehto, J., Ion Exchange in the Nuclear Power Industry, in: Ion Exchange Processes: Advances and Applications, Proceedings of ION-EX'93, Royal Society of Chemistry, 1993, p. 39.*

An efficient hexacyano ferrate-based ion exchange material has been developed for the selective separation of cesium from a wide variety of nuclear waste solutions. Said material has been used on an industrial-scale since 1991 (cf. *Harjula, R., Lehto, J., Tusa, E., and Paavola, A., Industrial Scale Removal of Cesium with Hexayanoferrate Exchangers - Process Development, Nucl. Technol. 107 (1994) 272*).

For strontium, titanates and hydrous titanium oxides have been shown to be effective as ion exchangers.

Crystalline sodium titanates belong to either of the following series Na₂TiₙO₂ₙ₊₁ (members with n = 1-9 have been reported) and Na₄TiₙO₂ₙ₊₂ (members with n = 1,3,5,9 have been reported). Only titanates with layered stucture, such as Na₂Ti₄O₉ and Na₄Ti₉O₂₀, exhibit ion exchange properties. The distinction between titanates and hydrous titanium oxides is not very clear. Hydrous titanium oxides prepared in alkali metal form can, however, be considered as amorphous or semicrystalline/precrystalline forms of titanates. Hydrous titanium oxides are known to have ion exchange groups at least on their surfaces.

Although, as mentioned, titanates and hydrous titanium oxides are known to be efficient exchangers for radioactive strontium, they have not been used on an industrial scale yet. This is mainly because of the difficulties in preparing them in granular forms which would be resistant to high temperatures and radiation doses and suitable for packed bed use.

There are a number of known methods for preparing hydrous titanium oxides and titanates. The methods are summarized in the following:
1) Precipitation of hydrous titanium oxides from aqueous titanium solutions, especially TiCl₄, with alkali solution, especially NaOH, at room temperature (*Abe, M., Wang, P., Chitrakar, R., and Tsuji, M. Adsorption and Desorption Behaviour of Heavy Metal Ions on Hydrated Titanium Dioxide, Analyst 114 (1989) 435*).
   The precipitation method gives rise to amorphous non-granular products with rather low capacities. Since the process is rapid the products are usually non-homogeneous and non-reproducible.
   To obtain more homogeneous products sol-gel methods have been used, in which better mixing of the reagents has been obtained by mixing titanium alkoxide with NaOH dissolved in alcohol. This results in the formation of a soluble titanate intermediate, which can be precipitated by adding water.
2) Boiling of amorphous products from the precipitation of TiCl₄ with NaOH or other solid hydrous titanium oxides, such as hydrous anatase, in concentrated NaOH solution (*Heinonen, O.J., Lehto, J., and Miettinen, J.K., Sorption of Strontium(II) and Radio Strontium Ions on Sodium Titanate, Radiochim. Acta 28 (1981) 93*).
   This treatment increases both the crystallinity and capacity of the product.
3) Hydrothermal treatment of amorphous products from the precipitation of TiCl₄ with NaOH or other solid hydrous titanium oxides, such as hydrous anatase or a sol-gel product, in concentrated NaOH solution.
   Rather high temperatures, 200-500 °C, and pressures, 20-400 bars, are needed for the hydrotermal treatment. The synthesis produces crystalline or semicrystalline titanates, such as Na₄Ti₉O₂₀·xH₂O (*Clearfield, A., and Lehto, J., Preparation, Structure and Ion Exchange Properties of Na*_{*4*}*Ti*_{*9*}*O*_{*20*}*·xH*_{*2*}*O, J. Solid State Chem. 73(1988)98*).
4) Solid state synthesis of crystalline titanates, such as Na₂Ti₆O₇, from solid titanium compounds, such as TiO₂, and a sodium salt, such as Na₂CO₃, at high temperatures, 700 - 1100 °C (GB *Patent No. 1,560,623 (1980)*).

A review of the patent literature shows that there are several patents on alkali metal titanates as such. Many of products are prepared by processes which use elevated and high temperatures in solid state synthesis (method 4 above) (*US Patent No. 1,697,929 (1929), FI Patent Application No. 2665*/*72 (1972), GB Patent No. 1,560,623 (1980), DE Patent No. 619,568, DE Patent No. 497,626. US Patent No. 3,993,740* describes a method to produce fibrous potassium titanate with a hydrothermal method.

Preparation methods for titanates to be used as ion exchangers for strontium removal are described in *WO Patent Application No. WO 83*/*03819, US Patent 4,161,513 (1979)* and *UK Patent 1,493,698.* They are mainly based on method 2 above.

*WO 83*/*03819* describes a method for manufacturing titanates from a titanium dioxide hydrate, which is suspended in water and alcohol. After heating , a base is added to the boiling mixture. By varying the reacting base it is possible to vary the selectivity of the product towards different metals. The titanates prepared have only moderate capacities for waste nuclides.

*US Patent 4,161,513* describes a method for preparing ion exchanger titanates where TiCl₄ is dissolved in alcohol or a ketone and the mixture is thereafter partially neutralized and chloride is removed after precipitation with a proper base. Finally titanate is precipitated with a base and water.

*GB Patent No. 1,493,698* describes a method to prepare ion exchanger titanates from titanyl alkoxides. This method is a typical sol-gel method wherein a base, e,g. NaOH, in alcohol solution is mixed with titanium alkoxide to form a homogeneous soluble intermediate, which is precipitated with water. The composition of the product is NaTi₂O₅H.

The above-mentioned known processes are hampered by considerable disadvantages. Thus, *WO 83*/*03819* fails to describe a method for preparing granular titanates which are suitable for column use, and both the methods given in *US Patent No. 4,161,513* and *GB Patent No. 1,493,698* use rather expensive raw materials and are complicated multistage processes. Furthermore, the capacities of the known ion exchangers are rather low.

In order to complete the survey of the related art, it should finally be mentioned that there are also patents describing methods to produce granular titanates in composite materials.

Thus, *CZ Patent No. A.O. 273,369* describes a method to produce grains of composite materials containing various inorganic ion exchange materials, including sodium titanate, in polyacrylonitrile (PAN) binder. It is highly improbable that PAN as an organic polymer would withstand high irradiation doses generated in the columns especially if highly active waste solution were treated with such an exchanger. *US Patent No. 5,298,199* describes a method to incorporate sodium titanate inside the pores of zeolite. The performance of such an exchanger in strontium removal is rather poor compared the sodium titanate claimed in this invention. The distribution coefficient for this known product, is rather poor, viz. measured in 2.1 M sodium ion solution only 1,958 mL/g at pH 11.1.

### Summary of the Invention

It is an object of the present invention to provide novel granular sodium titanate ion exchangers.

Further, it is an object of the present invention to provide a method for producing titanate ion exchangers which are suitable for column use.

These and other objects, together with the advantages thereof over known titanate ion exchangers and processes for the preparation of titanates, which shall become apparent from the specification which follows, are accomplished by the invention as hereinafter described and claimed.

In general, the present invention provides novel sodium titanate ion exchanger consisting essentially of granules with a particle size of 0.1 to 2 mm and a sodium-to-titanium molar ratio of less than 0.6 and having a selectivity coefficient of the exchange of Na for Sr greater than 50,000, an ion exchange capacity of more than 4.5 meq/g and a distribution coefficient for radioactive strontium of more than 40,000 ml/g, measured in an aqueous solution of 2.0 M NaCl at pH 11.

The present invention also provides a method of producing titanate ion exchangers containing an exchangeable cation. The preparation method according to the present invention belongs primarily to the methods of category 2 above. Thus, a slurry containing solid hydrous titanium oxide, an alkaline agent, and a liquid is formed. The titanium oxide is reacted with the alkaline agent in said slurry at an increased temperature to produce a titanate-containing solid product, which is settled out and separated from the liquid phase. The desired titanate is recovered from the solid product. According to the invention, high-capacity ion exchangers are provided by keeping the concentration of the exchangeable cation and/or the titanium sufficiently high in the slurry. The concentration of the exchangeable cation is greater than 3.5 mol per liter of slurry.

### Detailed Description of the Invention

The invention is now described in greater detail with reference to the attached drawings.

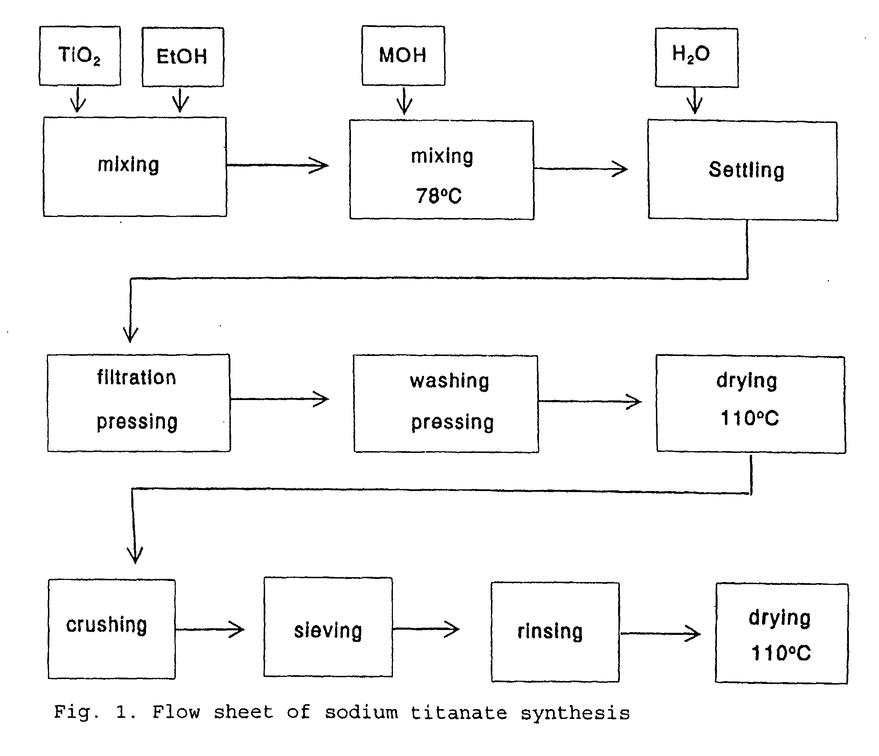

Figure 1 shows the titanate preparation process as a flow sheet; and
Figures 2 and 3 show breakthrough curves of strontium from sodium titanate columns.

The present sodium titanate ion exchanger consists essentially of granules with a particle size of 0.1 to 2 mm. According to the invention it is possible to prepare granules resistant to high temperatures and radiation doses having a particle size of about 0.3 to 0.85. Granules of this size are hydraulically very suitable for column use. The sodium-to-titanium molar ratio of the ion exchanger is less than 0.6 (about 0.56 for the ion exchanger according to the Example below).

The ion exchange capacity of the present ion exchangers is greater than 4.5 meq/g, and the distribution coefficient for radioactive strontium is higher than 40,000 ml/g, measured in an aqueous solution of 2.0 M NaCl at pH 11. The selectivity coefficient of the exchange of Na for Sr is greater 50,000.

The distribution coefficient of the present sodium titanates is extremely high. Measured in 3 M sodium ion solution at pH 10.8 the coefficient of the present ion exchangers is 18-times higher than that of the ion exchanger of *US Patent No. 5,298,199.* Since the column performance is directly proportional to distribution coefficient, this means that 18-times higher solution volume can be treated with the sodium titanate of this invention.

A comparison with an ion exchanger manufactured according to *WO 83*/*03819* gives a similar result. The distribution coefficient in 2.0 M NaCl of ⁸⁵Sr of the ion exchanger prepared according to the example described below is 50,000 ml/g, whereas the distribution coefficient for the prior art ion exchanger is only about 3,000 ml/g. The selectivity coefficient of the exchange of Na for Sr is 100,000 for the products of the example compared to about 15,000 for the prior art ion exchanger. Finally it should be mentioned that the capacity of the present ion exchangers is up to 5 meq/g, whereas the prior art ion exchanger have a capacity of about 2.8 meq/g.

The present method of producing titanate ion exchangers containing an exchangeable cation comprises the steps of:
- forming a slurry containing solid hydrous titanium oxide, an alkaline agent containing said exchangeable cation and a liquid, the concentration of said exchangeable cation being greater than 3.5 mol per litre of slurry and the concentration of titanium being greater than 1.5 mol per litre of slurry,
- reacting said titanium oxide with said alkaline agent in said slurry at a temperature of 20 to 150 °c during a time period of 1 min to 48 hours to produce a titanate product,
- settling a solids fraction containing said titanate product,
- separating said solids fraction and
- recovering a granular titanate product having a particle size of 0.1 to 2 mm from said solids fraction.

According to the invention a slurry having a titanium concentration of more than 1.5 mol per litre of slurry is formed. Likewise the concentration of the exchangeable ion exceeds 3.5 mol per litre of slurry. In particular, the concentration of the exchangeable ion should be greater than 5 mol and the concentration of titanium greater than 2 mol per litre of slurry.

The exchangeable ion is a cation selected from the group consisting of alkali metal cations and ammonium. The alkaline agent containing said exchangeable ion is preferably selected from the group consisting of alkali metal hydroxides and ammonium hydroxide. According to a particularly preferred embodiment, the hydrous titanium oxide is mixed with said alkali metal hydroxide at a molar ratio of alkali metal to titanium of less than 4, in particular less than 2. In the Example described below the Na/Ti ratio (mol/mol) is 1.87.

The liquid of the slurry is selected from the group consisting of lower alkanols and aqueous lower alkanols. Ethanol and aqueous ethanol are particularly preferred.

The composition of the reaction mixture/slurry can be as follows:
- 5 to 10 wt-% water,
- 40 to 50 wt-% ethanol,
- 20 to 30 wt-% titanium oxide, and
- 15 to 30 wt-% sodium hydroxide.

In comparison to the prior art method of *WO 83*/*03819*, the reaction slurry contains less water (less than 10 wt-% vs. more than 40 wt-%) and more titanium oxide and sodium hydroxide (more than 20 wt-% vs. less than 6 wt-% and less than 13 wt-%, respectively).

According to the method, the titanium oxide is reacted with the alkaline agent at an increased temperature of 30 to 150 °C, in practice, the boiling point of said liquid, i.e. 70 - 90 °C, depending on the liquid medium.

The reaction time is 1 min to 48 hours. For the formation of a granular product, it is advantageous to add cold water to the reaction slurry to settle a solids fraction containing said titanate product after the completion of the reaction. The water is "cold" denoting that the temperature of the water is appreciably lower than the reaction temperature. Typically the temperature of the water is 0 °C to 25 °C.

The following additional process steps are considered advantageous:
- recovery of the settled titanate product to produce a titanate filtration cake by using a pressure filter,
- washing of the filtration cake until it is essentially alkali-free,
- drying of the washed filtration cake essentially to constant weight,
- crushing of the dried cake to produce granules of various sizes,
- selection of granules having a particle size of 0.1 to 2 mm, and
- rinsing of the granules of said particle size in order to remove at least a part of any solid fines to produce a granular titanate product.

The steps of washing and treating the filtration cake can be carried out in the pressure filter. The dried material is equilibrated for approx. one week with the air humidity before crushing. The crushing can be performed with a jaw crusher, and the crushed cakes are sieved to obtain the desired particle size distribution.

Rinsing is effected with a washing agent selected from the group consisting of water and solutions of lithium nitrate, lithium chloride, sodium nitrate, sodium chloride, potassium nitrate, potassium chloride, ammonium nitrate and ammonium chloride. Nitrates are preferred in order to avoid corrosion of the equipment.

The preferred embodiment of the present invention comprises the following steps:
a) Solid hydrous titanium oxide, preferably industrial intermediate from titanium dioxide pigment process, is slurried in an alcohol, preferably in ethanol.
b) Alkali metal hydroxide is added as solid pellets/flakes which heats up the mixture to its boiling point due to the high dissolution heat of alkali metal hydroxides. Thus external heating can be avoided. Alkali metal and ammonium hydroxide can also be added as alcohol solutions and the mixture is heated to boiling with an internal heater.
   The mixture is stirred during the reaction.
c) Water is added to the mixture. This results in the settling of the solid matter, which was uniformly dispersed in the solution prior to addition of water.
d) Titanate is separated from the solution phase, preferably with pressure filtration.
e) Titanate is washed with water until practically free from alkalis. This can be carried out most efficiently with a pressure filtration system.
f) Washed titanate cake is dried to constant weight, preferably at 110 °C. Dried cakes are crushed, with a jaw crusher for example, and the desired grain sizes are sieved. Granules are rinsed with water and/or Li/Na/K/NH₄NO₃ or the correspoding chlorides of alkali metals or ammonium to remove most of the solid fines from the granule surfaces.

Finally, the grains are again dried to constant weight at 110 °C.

It should be noticed that the second drying step is optional and the ion exchanger can be delivered as wet granules having a dry matter content of 10 - 50 wt-%.

The process according to the present invention achieves considerable advantages over the prior art processes. Thus, as the above description has shown, the present invention provides an efficient and economic method to produce resistant granules of alkali metal and ammonium titanates. The present method can be successfully carried out on an industrial-scale to produce large amounts of titanates. In addition, it is applicable to industrial scale removal of strontium from nuclear waste solutions.

Using the present invention high temperatures and pressures can be avoided, but the granular products obtained have capacities even higher than those of hydrothermal or solid state synthesis products.

The present invention invention uses only inexpensive raw materials and the process is very straightforward producing titanate granules at high yield.

The following working example illustrates titanate synthesis according to the present invention.

### Example

40 kg of hydrous titanium anatase (FINNTI S130, Kemira Pigments, Finland) was carefully slurried in 80 litres of ethanol (ETAX A, 96 %, Primalco, Finland) in a 250 litre reaction vessel made of stainless steel. This took approximately 15 minutes.

10 kg of solid NaOH pellets were added within a few minutes, which resulted in the boiling of the mixture. After waiting half an hour 20 kg of NaOH pellets were added to the reaction mixture so that 2 kg were added every fifteen minutes. This kept the mixture boiling continuously.

After approximately three hours boiling 80 litres of tap water (temperature approximately 10-15 °C) was rapidly added to the reaction mixture, which terminated boiling and resulted in the efficient settling of the solid matter.

The reaction mixture was allowed to cool and settle overnight.

Solid matter containing titanate was separated and washed free from the reaction liquor with a pressure filtration system (PF 0.1H2, Larox, Finland). First most of the reaction liquor was removed by pressing at 16 bars membrane pressure over the three centimetre cake. Thereafter the cake was washed with pressurised water (16 bar) free from alkali. Detection of release of alkali was carried out by measuring the pH of the supernatant. Approximately 8 litres of wash water was needed to decrease the pH from initial 14 to about 12 which is sufficiently low.

Cakes were dried over one night at 110 °C, whereafter they were manually crushed into grains with diameter of about 1-2 cm. Thereafter they were dried over another night, which was long enough time to reached the constant weight. Water content of the cakes prior to drying was 50-55 %.

The dried material was let to equilibrate with the air humidity for approximately one week in order to have 'solid' grains.

Course grains were crushed with a jaw crusher to 0.3-0.85 mm (20-50 mesh) and 0.15-0.3 mm (50-100 mesh) grain sizes. The yields of the grain size fractions were: 0.85-0.30 mm c. 57 %, 0.30-0.15 mm c. 16 % and < 0.15 mm c. 27 %.

Grain size fraction 0.3-0.85 mm was rinsed three times with 0.1 M NaNO₃ solution to remove most of the solid fines at grain surfaces. NaNO₃ was used to avoid hydrolysis of sodium titanate, i.e the following reaction:

NaₓTi_{y}O_{z} + xH₂O ⇄ HₓTi_{y}O_{z} + xNa⁺ + OH⁻

Rinsed grains were dried at 110 °C over one night.

Sodium titanate prepared by the method described above had the following composition, determined as an average of ten samples:
- Na: 12.8 % ± 0.7%
- Ti: 49.0 % ± 0.7%
- H₂O: c. 15 % ± 0.7%

The product is more or less amorphous. In the x-ray diffraction pattern there are only very diffuse reflections at about 9°, 24° and 28° (2theta). Since the crystallinity of the product is rather poor stoichiometry of the composition has not been presented as a definite formula.

Sodium titanate takes up radioactive strontium very efficiently. From 3 M NaCl solution at pH of 10.8 the distribution coefficient (K_{D}) was 30,300 ± 8,100 ml/g, which is an average value of nine products from different production batches. Distribution coefficient, which is the most common measure to present the effectiveness, selectivity, of an ion exchanger to certain ions in trace concentration is defined as

K_{D} = Cₑ/Cₛ = (Aₒ/A - 1) · V/m,

wherein
- Cₑ: is the equilibrium concentration of strontium in the exchanger phase,
- Cₛ: stands for the corresponding concentration in the solution phase,
- Aₒ: represents the initial strontium activity,
- A: represents the activity after ion exchange,
- V: stands for the solution volume (ml) and
- m: is the exchanger mass (g).

The practical capacity of the sodium titanate is also very high, 5.0 ± 0.30 meq/g, which is an average value for nine samples from different production batches. Practical capacity values were determined using a batch method, i.e equilibrating 1.0 g samples of sodium titanate with 100 ml of 0.03 M Sr(NO)₂ solution. The narrow distribution of K_{D}'s and capacity values, as well as the compositions, of the products from different production batches indicate that the process results in reproducible products.

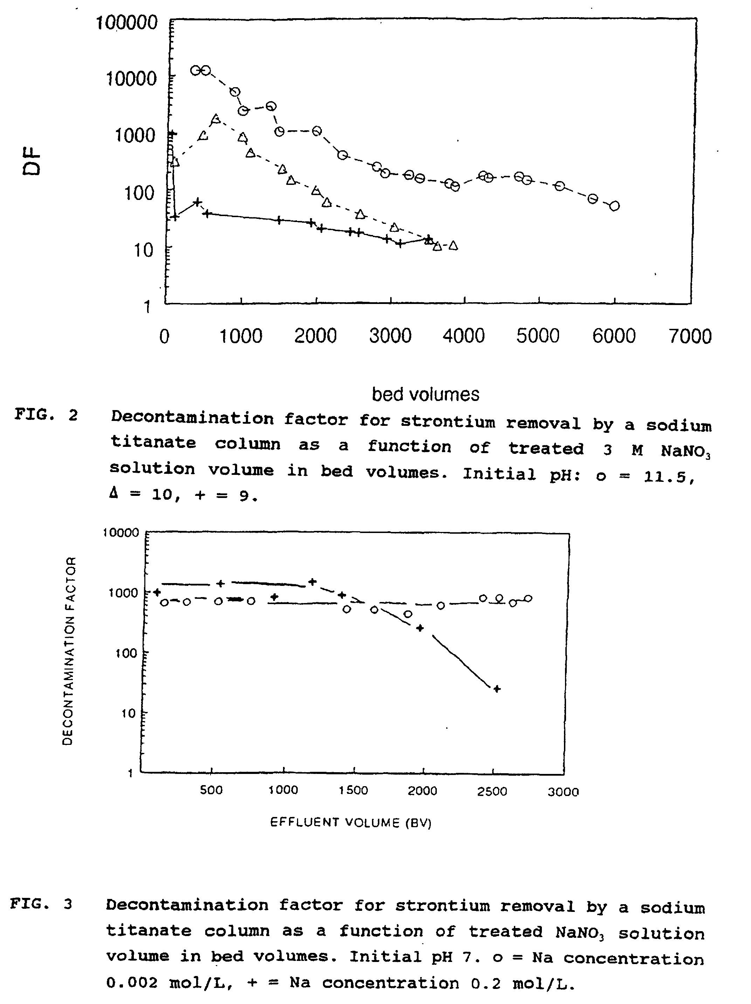

Column experiments with various nuclear waste simulants have also shown that this sodium titanate is very efficient in the removal of radioactive strontium and that the granules are sufficiently resistant to be used in packed bed columns. Figure 2 shows breakthrough curves for strontium from 3M NaNO₃ solution containing 0.01 mmol/L of inactive strontium together with ⁸⁵Sr tracer.

As can be seen, sodium titanate takes up strontium very efficiently from this concentrated solution, which simulates typical reprocessing waste solutions. The optimum pH in this sodium ion concentration is 10 and above, at which pH values appromixately thousand bed volumes can be treated with a decontamination of higher than 1000 (99.9 % removal). Five thousand bed volumes can be treated with a decontamination factor of higher than 200 (99.5 % removal).

Figure 3 shows the performance of sodium titanate columns for the removal of strontium from more dilute sodium ion solutions, 0.2 M and 0.002M, at pH 7. At least a few thousand bed volumes can be purified with a decontamination factor between 700 and 1000.

The titanate ion exchangers are especially applicable in columns and packed bed operations. The particle size of the obtained granular titanate ion exchangers is between 0.1 - 2 mm, preferably 0.3-0.85 mm.

Although the invention has been described above with reference to sodium titanates, titanates containing the cations of other alkali metals, such as potassium, and ammonium, will work as well. In fact, test results show that for many purposes potassium titanates are just as good as sodium titanates as ion exchangers and, depending on the application, their selectivity can even be better.

## Claims

1. A sodium titanate ion exchanger consisting essentially of granules with a particle size of 0.1 to 2 mm and a sodium-to-titanium molar ratio of less than 0.6 and having a selectivity coefficient of the exchange of Na for Sr greater than 50,000, an ion exchange capacity of more than 4.5 meq/g and a distribution coefficient for radioactive strontium of more than 40,000 ml/g, measured in an aqueous solution of 2.0 M NaCl at pH 11.

2. The ion exchanger according to claim 1, wherein the granules have a particle size of 0.3 to 0.85 mm.

3. A method of producing titanate ion exchangers containing an exchangeable cation, the method comprising the steps of:
- forming a slurry containing solid hydrous titanium oxide, an alkaline agent containing said exchangeable cation and a liquid, the concentration of said exchangeable cation being greater than 3.5 mol per litre of slurry and the concentration of titanium being greater than 1.5 mol per litre of slurry,
- reacting said titanium oxide with said alkaline agent in said slurry at a temperature of 20 to 150 °c during a time period of 1 min to 48 hours to produce a titanate product,
- settling a solids fraction containing said titanate product,
- separating said solids fraction and
- recovering a granular titanate product having a particle size of 0.1 to 2 mm from said solids fraction.

4. The method according to claim 3, wherein the concentration of said exchangeable ion is greater than 5 mol per litre of slurry and the concentration of titanium is greater than 2 mol per litre of slurry.

5. The method according to claim 3, wherein said alkaline agent is selected from the group consisting of alkali metal hydroxides and ammonium hydroxide.

6. The method according to claim 3, wherein said liquid is selected from the group consisting of lower alkanols and aqueous lower alkanols.

7. The method according to claim 6, wherein said liquid is ethanol or aqueous ethanol.

8. The method according to claim 3, wherein said alkaline agent is an alkali metal hydroxide and said hydrous titanium oxide is mixed with said alkali metal hydroxide at a molar ratio of alkali metal to titanium of less than 4.

9. The method according to claim 8, wherein said hydrous titanium oxide is mixed with said alkali metal hydroxide at a molar ratio of less than 2.

10. The method according to claim 3, wherein said titanium oxide is reacted with said alkaline agent at the boiling point of said liquid.

11. The method according to claim 3, wherein said slurry comprises
- 5 to 10 wt-% water,
- 40 to 50 wt-% ethanol,
- 20 to 30 wt-% titanium hydroxide, and
- 15 to 30 wt-% sodium hydroxide.

12. The method according to claim 3, wherein said slurry is formed by first adding solid hydrous titanium oxide to said solvent and then adding said alkaline agent.

13. The method according to claim 12, wherein said alkaline agent is an alkali metal hydroxide which is added as solid pellets which are at least partially dissolved in said solvent phase.

14. The method according to claim 13, wherein said alkaline agent is added within a predetermined period.

15. The method according to claim 13, wherein said slurry is heated by the dissolution heat of said alkali metal hydroxides.

16. The method according to claim 3, wherein said slurry is formed by mixing together said solid hydrous titanium oxide, said liquid and a solution of said alkaline agent.

17. The method according to claim 16, wherein said solution of said alkaline agent comprises the same liquid as a solvent as said slurry.

18. The method according to claim 3, which comprises adding water having a temperature 0 °C to 25 °C to said slurry to settle a solids fraction containing said titanate product.

19. The method according to claim 3, which comprises recovering said titanate product by filtering said slurry with a pressure filter to produce a titanate filtration cake.

20. The method according to claim 3, which comprises the additional steps of
- washing said filtration cake until it is essentially alkali-free,
- drying said washed filtration cake essentially to constant weight,
- crushing said dried cake to produce granules of various sizes,
- selecting granules having a particle size of 0.1 to 2 mm, and
- rinsing said granules of said particle size in order to remove at least a part of any solid fines to produce a granular titanate product.

21. The method according to claim 20, wherein said washing is carried out with said pressure filter.

22. The method according to claim 20, wherein said crushing is carried out with a jaw crusher.

23. The method according to claim 20, wherein rinsing is carried with a washing agent selected from the group consisting of water and solutions of lithium nitrate, lithium chloride, sodium nitrate, sodium chloride, potassium nitrate, potassium chloride, ammonium nitrate and ammonium chloride.

24. The method according to claim 20, wherein titanate granules of particles sizes in the range of 0.3 to 0.85 mm are selected.

25. The method according to claim 20, wherein said dried material is equilibrated with the air humidity before crushing.

26. The method according to claim 25, wherein said equilibrating takes approximately one week.

27. The method according to claim 20, wherein said crushed cakes are sieved.

## Patentansprüche

1. Natriumtitanat-Ionenaustauscher, im wesentlichen bestehend aus Granulat mit einer Teilchengröße von 0,1 bis 2 mm und einem Molverhältnis von Natrium zu Titan von weniger als 0,6, mit einem Selektivitätskoeffizienten für den Austausch von Na gegen Sr von über 50.000, einer Ionenaustauschkapazität von über 4,5 mäq/g und einem Verteilungskoeffizienten für radioaktives Strontium von über 40.000 ml/g, gemessen in einer wässrigen 2,0 M NaCl-Lösung bei einem pH-Wert von 11.

2. Ionenaustauscher nach Anspruch 1, worin das Granulat eine Teilchengröße von 0,3 bis 0,85 mm hat.

3. Verfahren zur Herstellung von Titanat-Ionenaustauschern mit einem austauschbaren Kation, umfassend die Schritte:
- Bilden einer Schlemme, enthaltend festes wässriges Titanoxid, ein alkalisches Mittel, welches das austauschbare Kation und eine Flüssigkeit enthält, wobei die Konzentration des austauschbaren Kations über 3,5 Mol pro Liter Aufschlämmung ist und die Titankonzentration über 1,5 Mol pro Liter Aufschlämmung ist,
- Umsetzen des Titanoxids mit dem alkalischen Mittel in der Aufschlämmung bei einer Temperatur von 20 bis 150°C über einen Zeitraum von 1 Minute bis 48 Stunden, um ein Titanatprodukt herzustellen,
- Absetzenlassen einer Feststoff Fraktion, welche das Titanatprodukt enthält,
- Abtrennen der Feststoff-Fraktion und
- Gewinnen eines granulären Titanatprodukts mit einer Teilchengröße von 0,1 bis 2 mm aus der Feststoff-Fraktion.

4. Verfahren nach Anspruch 3, worin die Konzentration des austauschbaren Ions größer als 5 Mol pro Liter Aufschlämmung ist und die Titankonzentration größer als 2 Mol pro Liter Aufschlämmung ist.

5. Verfahren nach Anspruch 3, worin das alkalische Mittel aus der Gruppe aus Alkalimetallhydroxiden und Ammoniumhydroxid ausgewählt ist.

6. Verfahren nach Anspruch 3, worin die Flüssigkeit aus der Gruppe aus niederen Alkanolen und wässrigen niederen Alkanolen ausgewählt ist.

7. Verfahren nach Anspruch 6, worin die Flüssigkeit Ethanol oder wässriges Ethanol ist.

8. Verfahren nach Anspruch 3, worin das alkalische Mittel ein Alkalimetallhydroxid ist und das wässrige Titanoxid mit dem Alkalimetallhydroxid in einem Molverhältnis von Alkalimetall zu Titan von unter 4 gemischt wird.

9. Verfahren nach Anspruch 8, worin das wässrige Titanoxid mit dem Alkalimetallhydroxid in einem Molverhältnis von weniger als 2 gemischt wird.

10. Verfahren nach Anspruch 3, worin das Titanoxid mit dem alkalischen Mittel bei dem Siedepunkt der Flüssigkeit umgesetzt wird.

11. Verfahren nach Anspruch 3, worin die Aufschlämmung umfasst:
- 5 bis 10 Gew.-% Wasser,
- 40 bis 50 Gew.-% Ethanol,
- 20 bis 30 Gew.-% Titanhydroxid und
- 15 bis 30 Gew.-% Natriumhydroxid.

12. Verfahren nach Anspruch 3, worin die Aufschlämmung gebildet wird, indem zunächst festes wässriges Titanoxid zu dem Lösungsmittel zugegeben wird und anschließend das alkalische Mittel zugegeben wird.

13. Verfahren nach Anspruch 12, worin das alkalische Mittel ein alkalisches Metallhydroxid ist, welches in Form fester Pellets zugegeben wird, die sich wenigstens teilweise in der Lösungsmittelphase lösen.

14. Verfahren nach Anspruch 13, worin das alkalische Mittel in einem vorbestimmten Zeitraum zugegeben wird.

15. Verfahren nach Anspruch 13, worin die Aufschlämmung durch die Lösungswärme des Alkalimetallhydroxids erwärmt wird.

16. Verfahren nach Anspruch 3, worin die Aufschlämmung gebildet wird, indem das feste wässrige Titanoxid, die Flüssigkeit und eine Lösung des alkalischen Mittels miteinander gemischt werden.

17. Verfahren nach Anspruch 16, worin die Lösung des alkalischen Mittels die gleiche Flüssigkeit als Lösungsmittel umfasst wie die Aufschlämmung.

18. Verfahren nach Anspruch 3, umfassend das Zugeben von Wasser mit einer Temperatur von 0°C bis 25°C zu der Aufschlämmung, so dass sich eine das Titanatprodukt enthaltende Feststoff-Fraktion absetzt.

19. Verfahren nach Anspruch 3, umfassend das Zurückgewinnen des Titanatprodukts durch Filtrieren der Aufschlämmung mit einem Druckfilter, so dass ein Titanatfilterkuchen entsteht.

20. Verfahren nach Anspruch 3, umfassend die zusätzlichen Schritte:
- Waschen des Filterkuchens bis er im wesentlichen alkalifrei ist,
- Trocknen des gewaschenen Filterkuchens im wesentlichen bis er ein gleichbleibendes Gewicht aufweist,
- Zerstoßen des getrockneten Kuchens, um Körnchen mit unterschiedlicher Größe herzustellen,
- Auswählen der Körnchen mit einer Teilchengröße von 0,1 bis 2 mm und
- Ausspülen der Körnchen mit dieser Teilchengröße, um wenigstens einen Teil fester Feinstpartikel zu entfernen, so dass ein granuläres Titanatprodukt entsteht.

21. Verfahren nach Anspruch 20, worin das Waschen mit dem Druckfilter durchgeführt wird.

22. Verfahren nach Anspruch 20, worin das Zerstoßen mit einem Backenbrecher durchgeführt wird.

23. Verfahren nach Anspruch 20, worin das Spülen mit einem Waschmittel durchgeführt wird, welches aus der Gruppe aus Wasser und Lithiumnitrat-, Lithiumchlorid-, Natriumnitrat-, Natriumchlorid-, Kaliumnitrat-, Kaliumchlorid-, Ammoniumnitrat- und Ammoniumchlorid-Lösungen ausgewählt ist.

24. Verfahren nach Anspruch 20, worin Titanatkörnchen mit einer Teilchengröße im Bereich von 0,3 bis 0,85 mm ausgewählt werden.

25. Verfahren nach Anspruch 20, worin das getrocknete Material vor dem Zerstoßen durch die Luftfeuchtigkeit äquilibriert wird.

26. Verfahren nach Anspruch 25, worin die Äquilibrierung etwa eine Woche dauert.

27. Verfahren nach Anspruch 20, worin die zerstoßenen Kuchen gesiebt werden.

## Revendications

1. Echangeur d'ions titanate de sodium constitué essentiellement de granules dont la taille des particules est comprise entre 0,1 et 2 mm et le rapport molaire entre le sodium et le titane est inférieur à 0,6 et ayant un coefficient de sélectivité de l'échange entre le Na et le Sr supérieur à 50.000, une capacité d'échange d'ions supérieure à 4,5 meq/g et un coefficient de répartition pour le strontium radioactif supérieur à 40.000 ml/g, mesurés dans une solution aqueuse de NaCl 2,0 M à pH 11.

2. Echangeur d'ions selon la revendication 1, dans lequel les granules ont une taille de particules comprise entre 0,3 et 0,85 mm.

3. Procédé pour la préparation d'échangeurs d'ions titanate contenant un cation échangeable, le procédé comprenant les étapes consistant à :
- former une suspension contenant de l'oxyde de titane hydraté solide, un agent alcalin contenant ledit cation échangeable et un liquide, la concentration dudit cation échangeable étant supérieure à 3,5 moles par litre de suspension et la concentration de titane étant supérieure à 1,5 mole par litre de suspension,
- faire réagir ledit oxyde de titane avec ledit agent alcalin dans ladite suspension à une température comprise entre 20 et 150 °C pendant une période allant de 1 min à 48 heures pour obtenir un produit de titanate,
- faire sédimenter une fraction de solides contenant ledit produit de titanate,
- séparer ladite fraction de solides et
- recueillir un produit de titanate granulaire ayant une taille de particules comprise entre 0,1 et 2 mm à partir de ladite fraction de solides.

4. Procédé selon la revendication 3, dans lequel la concentration dudit ion échangeable est supérieure à 5 moles par litre de suspension et la concentration de titane est supérieure à 2 moles par litre de suspension.

5. Procédé selon la revendication 3, dans lequel ledit agent alcalin est sélectionné parmi le groupe constitué par des hydroxydes de métaux alcalins et d'hydroxyde d'ammonium.

6. Procédé selon la revendication 3, dans lequel ledit liquide est sélectionné parmi le groupe constitué par des alcanols inférieurs et des alcanols inférieurs aqueux.

7. Procédé selon la revendication 6, dans lequel ledit liquide est l'éthanol ou l'éthanol aqueux.

8. Procédé selon la revendication 3, dans lequel ledit agent alcalin est un hydroxyde de métal alcalin et ledit oxyde de titane hydraté est mélangé avec ledit hydroxyde de métal alcalin à un rapport molaire entre le métal alcalin et le titane inférieur à 4.

9. Procédé selon la revendication 8, dans lequel ledit oxyde de titane hydraté est mélangé avec ledit hydroxyde de métal alcalin à un rapport molaire inférieur à 2.

10. Procédé selon la revendication 3, dans lequel ledit oxyde de titane est mis à réagir avec ledit agent alcalin au point d'ébullition dudit liquide.

11. Procédé selon la revendication 3, dans lequel ladite suspension comprend
- 5 à 10 % en poids d'eau,
- 40 à 50 % en poids d'éthanol,
- 20 à 30 % en poids d'hydroxyde de titane, et
- 15 à 30 % en poids d'hydroxyde de sodium.

12. Procédé selon la revendication 3, dans lequel ladite suspension est formée en ajoutant tout d'abord l'oxyde de titane hydraté solide audit solvant et en ajoutant ensuite ledit agent alcalin.

13. Procédé selon la revendication 12, dans lequel ledit agent alcalin est un hydroxyde de métal alcalin qui est ajouté sous forme de pastilles solides qui sont au moins partiellement dissoutes dans ladite phase de solvant.

14. Procédé selon la revendication 13, dans lequel ledit agent alcalin est ajouté sur une période prédéterminée.

15. Procédé selon la revendication 13, dans lequel ladite suspension est chauffée par la chaleur de dissolution desdits hydroxydes de métaux alcalins.

16. Procédé selon la revendication 3, dans lequel ladite suspension est formée en mélangeant conjointement ledit oxyde de titane hydraté solide, ledit liquide et un solution dudit agent alcalin.

17. Procédé selon la revendication 16, dans lequel ladite solution dudit agent alcalin comprend le même liquide sous forme de solvant que ladite suspension.

18. Procédé selon la revendication 3, qui comprend l'addition d'eau ayant une température comprise entre 0 °C et 25 °C à ladite suspension pour sédimenter une fraction de solides contenant ledit produit de titanate.

19. Procédé selon la revendication 3, qui comprend la récupération dudit produit de titanate en filtrant ladite suspension avec un filtre sous pression pour obtenir un tourteau de filtration de titanate.

20. Procédé selon la revendication 3, qui comprend les étapes supplémentaires consistant
- laver ledit tourteau de filtration jusqu'à ce qu'il soit essentiellement dépourvu d'alcali,
- sécher ledit tourteau de filtration lavé essentiellement à poids constant,
- broyer ledit tourteau séché pour produire des granules de tailles diverses,
- sélectionner des granules ayant une taille de particules comprise entre 0,1 et 2 mm, et
- rincer lesdites granules de ladite taille de particules afin d'éliminer au moins une partie de n'importe quelle fine solide pour produire un produit de titanate granulaire.

21. Procédé selon la revendication 20, dans lequel ledit lavage est effectué avec ledit filtre sous pression.

22. Procédé selon la revendication 20, dans lequel ledit broyage est effectué à l'aide d'un broyeur à mâchoires.

23. Procédé selon la revendication 20, dans lequel le rinçage est effectué avec un agent lavant sélectionné parmi le groupe constitué par l'eau et des solutions de nitrate de lithium, chlorure de lithium, nitrate de sodium, chlorure de sodium, nitrate de potassium, chlorure de potassium, nitrate d'ammonium et chlorure d'ammonium.

24. Procédé selon la revendication 20, dans lequel des granules de titanate ayant des tailles de particules dans la gamme comprise entre 0,3 et 0,85 mm sont sélectionnées.

25. Procédé selon la revendication 20, dans lequel ledit matériau séché est équilibré avec l'humidité de l'air avant le broyage.

26. Procédé selon la revendication 25, dans lequel ladite équilibration prend approximativement une semaine.

27. Procédé selon la revendication 20, dans lequel lesdits tourteaux broyés sont tamisés.
